Europäisches Patentamt

European Patent Office

Office européen des brevets

(11) Numéro de publication : **0 149 929 B2**

(12) **NOUVEAU FASCICULE DE BREVET EUROPEEN**

(45) Date de publication du nouveau fascicule du brevet : **08.09.93 Bulletin 93/36**

(51) Int. Cl.⁵ : **C01B 33/34**

(21) Numéro de dépôt : **84401830.9**

(22) Date de dépôt : **14.09.84**

(54) **Procédé de production d'une zéolite par mélange en continu.**

(30) Priorité : **21.09.83 FR 8314985**

(43) Date de publication de la demande :
**31.07.85 Bulletin 85/31**

(45) Mention de la délivrance du brevet :
**28.12.88 Bulletin 88/52**

(45) Mention de la décision concernant
l'opposition :
**08.09.93 Bulletin 93/36**

(84) Etats contractants désignés :
**AT BE CH DE FR GB IT LI LU NL SE**

(56) Documents cités :
**CHEMICAL ABSTRACTS, vol. 97, no. 18, 1er
novembre 1982, page 135, colonne de gauche,
no. 147062z, Columbus, Ohio, USA**

(56) Documents cités :
**CHEMICAL ABSTRACTS, vol. 97, no. 24, 13
décembre 1982, page 128, colonne de droite,
no. 200281g, Columbus, Ohio, USA
CHEMICAL ABSTRACTS, vol. 96, no. 20, 17 mai
1982, page 136, colonne de droite, no.
164989n, Columbus, Ohio, USA
CHEMICAL ABSTRACTS, vol. 98, no. 14, 4 avril
1983, page 143, colonne de gauche, no.
109879t, Columbus, Ohio, USA**

(73) Titulaire : **LAVIOSA RHONE-POULENC
Via Leonardo de Vinci 21
I-57123 Livourne (IT)**

(72) Inventeur : **Latourrette, Bertrand
21, allée Clémencet
F-93340 Le Raincy (FR)**
Inventeur : **Menesguen-Tugaye, Anne
5, Résidence des 3 Forêts
F-78380 Bougival (FR)**

(74) Mandataire : **Roggero, Sergio et al
Ing. Barzanò & Zanardo Milano S.p.A. Via
Borgonuovo 10
I-20121 Milano (IT)**

EP 0 149 929 B2

EP 0 149 929 B2

## Description

Procédé d'obtention de zéolites et notamment de zéolites A, à pouvoir et vitesse d'échange de cation élevés, produit ainsi obtenu et application en détergence.

La présente invention a trait à un procédé d'obtention de zéolites et notamment de zéolite A, à caractéristiques améliorées.

On sait que depuis environ une décennie, on a cherché un substitut au tripolyphosphate de sodium en tant qu'auxiliaire de détergence (builder).

A priori, un tel substitut devait:

- être excellent échangeur ou séquestrant de cation et notamment du calcium et du magnésium,
- être bon dispersant,
- pouvoir être produit en grande quantité et à bon marché.

Bien évidemment, il devait ne pas présenter d'inconvénient pour l'environnement écologique.

On s'est donc naturellement orienté vers les zéolites puisque, d'une part celles-ci avaient déjà été utilisées autrefois en détergence et que, d'autre part, des progrès avaient été réalisés dans le domaine des zéolites synthétiques.

Malheureusement, d'une part les zéolites disponibles ne pouvaient rivaliser avec le tripolyphosphate de Na et, d'autre part, en même temps que les exigences sur les produits croissaient, les contraintes sur les procédés se sont élevées.

De manière non exhaustive, on peut dire que quelques grandes voies se sont dégagées.

Bien que les zéolites de type 4A par exemple puissent être obtenues à température ambiante, les installations industrielles, pour des raisons économiques, ont généralement adopté des procédés à chaud mettant en oeuvre au moins une solution chaude de l'un des réactifs. Mais alors se posent des problèmes tenant à la formation du gel et à la cristallisation et évidemment des problèmes d'économie d'énergie, d'autant que les produits obtenus doivent pouvoir rivaliser en prix avec les produits qu'ils sont censés remplacer.

Un des points les plus délicats est celui de la formation du gel et donc de la qualité de la mise en contact des réactifs, qui est critique car il conditionne la qualité du produit final.

Par exemple, dans l'EP-A-13 417, on a proposé de faire appel à un système de buse à double fluide dans lesquels les réactifs sont alimentés séparément.

On a aussi préconisé, dans l'EP-A-17 013, de réaliser une multi-injection dans un réacteur en ménageant un temps de séjour moyen des réactifs d'au moins 5 secondes, mais cette multi-injection implique de faire appel à un tube très long et, de plus, impose un chemin sinueux.

Dans ce cas, le mélange doit, à l'évidence, être effectué après gélification.

Or, on sait qu'un gel a tendance à obstruer un conduit surtout lorsque ce dernier présente des sinuosités et des obstacles.

On a aussi proposé, dans le FR-A-2 379 479, de réaliser un mélange soigneux, en un temps aussi court que possible, qui peut être mit en oeuvre par un tube en Y renversé selon les exemples où les temps de mélange des solutions varient entre 6 et 7 minutes.

On a aussi décrit l'utilisation de mélangeurs statiques pour le mélange rapide des réactifs par exemple dans le JP-A-82 111 226 ou le JP-A-82 129 819, ces mélangeurs statiques pouvant être de forme tubulaire comme décrits dans le JP-A-82 03 713 ou JP-A-82 166 311.

Mais il est inutile d'insister sur les difficultés inhérentes au système micro-mélange, macro-mélange, sur une installation industrielle et au coût énergétique d'une telle solution.

Aussi, on a pensé allonger le temps nécessaire à la gélification.

Ainsi, dans le FR-A-2 376 074, on a proposé de réaliser le mélange avec des solutions relativement concentrées (correspondant à une teneur finale en zéolite supérieure à 200 g/l) et à basse température.

Les résultats se sont avérés spectaculaires au niveau du produit; toutefois, cela revient à abaisser la température d'au moins un réactif (par exemple l'aluminate) qui est fabriqué à une température relativement élevée.

Ceci rend d'autant plus difficile un éventuel tranfert de chaleur au milieu reactionnel.

Or, la demanderesse a trouvé qu'il était possible d'obvier les inconvénients de l'art antérieur.

Elle a, en particulier, trouvé qu'il était possible d'obtenir à chaud un gel homogène et susceptible d'être soumis à une agitation.

Le procédé d'obtention d'une zéolite, selon l'invention comporte une alimentation continue et simultanée d'une solution aqueuse de silicate de sodium et d'une solution aqueuse d'aluminate de sodium, mélange de ces solutions pendant le temps nécessaire à rendre ledit mélange homogène tout en étant inférieur au temps de gélification du milieu réactionnel, gélification et cristallisation, ledit procédé étant caractérisé en ce que les solutions aqueuses d'aluminate et de silicate sont alimentées à une température allant de 20 à 90 °C dans un réacteur non agité permettant d'assurer un nombre de Reynolds égal à au moins deux fois la valeur du nombre

2

de Reynolds critique pour un intervalle de température compris entre 20 à 90 °C, la valeur du nombre Reynolds devant être d'autant plus élevée que la valeur de la température du mélange est elle-même plus élevée.

On considère ici qu'un mélange est homogène si ce mélange présente, en tout point, à un instant donné, la même composition, la même concentration et la même température.

Le temps de gélification, est ici le temps nécessaire pour obtenir la viscosité maximale dans le milieu.

Avantageusement, selon l'invention, le réacteur est de type tubulaire, avantageusement de type à écoulement piston.

Mais, de manière générale, on peut faire appel à tout réacteur conduisant à la satisfaction des conditions ci-dessus.

Ainsi, on pourra également faire appel à un mélangeur de type Venturi.

De préférence, le temps de séjour dans le réacteur doit être inférieur mais proche du temps de gélification, c'est-à-dire que la formation du gel doit apparaître à proximité de la sortie du réacteur. Par ailleurs, ce temps de séjour doit être très bref.

On peut prendre comme source de réactif, toute source conduisant à une phase liquide telle que solutions aqueuses d'aluminate et silicate. On peut, en particulier, utiliser l'acide fluosilicique ou un fluosilicate comme source primaire de silice.

La demanderesse a observé que, d'une manière générale, la qualité du produit final obtenu dépendait d'un certain nombre de facteurs:

- valeur du rapport $H_2O/Na_2O$
- rapport molaire $SiO_2/Al_2O_3$
- conditions de mélange.

Ces observations sont illustrées par les courbes ci-annexées.

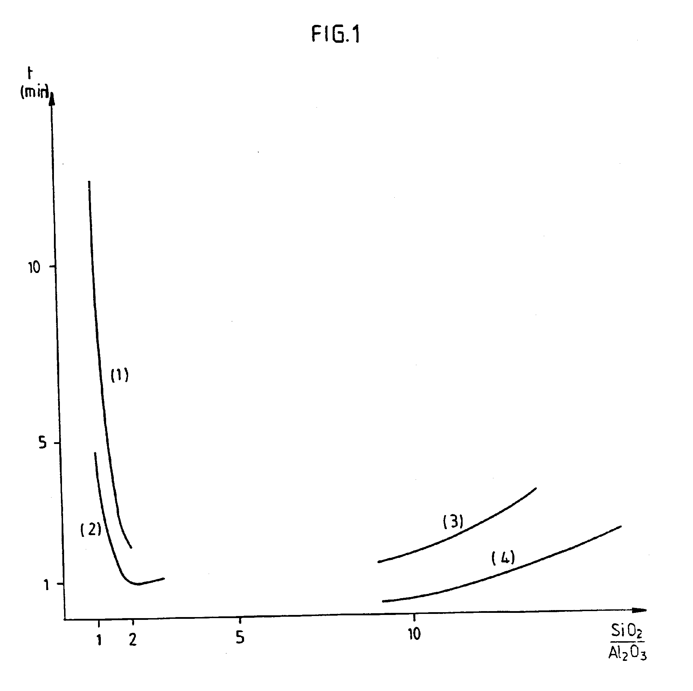

La figure 1 illustre la variation du temps de gélification exprimé en minutes, en fonction du rapport $SiO_2/Al_2O_3$, en tenant compte du rapport molaire $H_2O/Na_2O$ à 20 °C.

La courbe (1) correspond à un rapport molaire
$H_2O/Na_2O = 18,6$
La courbe (2) correspond à un rapport molaire
$H_2O/Na_2O = 20$
La courbe (3) correspond à un rapport molaire
$H_2O/Na_2O = 46$
La courbe (4) correspond à un rapport molaire
$H_2O/Na_2O = 75$

On note que ce temps de gélification, toutes autres conditions égales par ailleurs, dépend dudit rapport et du rapport molaire $SiO_2/Al_2O_3$.

La figure 2 illustre l'influence de la température sur le temps de gélification pour la composition chimique suivante:

$SiO_2/Al_2O_3 = 1,1$
$H_2O/Na_2O = 18,6.$

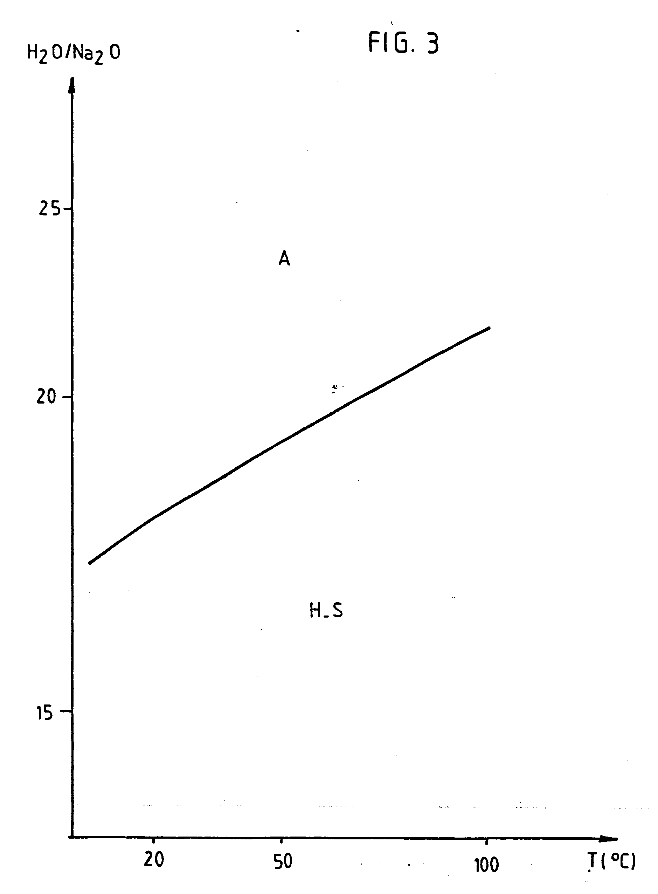

La figure 3 représente le sens de variation du rapport molaire $H_2O/Na_2O$ limite en fonction de la température. Par rapport $H_2O/Na_2O$ limite, on entend le rapport en dessous duquel on observe la formation d'hydroxy-sodalite.

La figure 4 représente l'incidence du couple $SiO_2/Al_2O_3$, $H_2O/Na_2O$ sur la granulométrie des courbes (5), (6) et (7) correspondant à des rapports molaires $H_2O/Na_2O$ égaux respectivement à 18,6-21,7 et 23,6.

La granulométrie est telle qu'observée globalement au compteur Coulter, généralement adopté par l'utilisateur; on peut la considérer comme représentative de la structure secondaire, par rapport à la structure en cristallites ou structure primaire.

On constate que, dans ces conditions, il est possible de faire varier la granulométrie dans un intervalle assez large.

Ces observations conduisent à penser qu'il existe un ensemble de conditions optimales pour mettre en oeuvre un procédé de fabrication de zéolite d'une granulométrie donnée.

Mais, comme on l'a fait observer précédemment, il s'agit de pouvoir satisfaire ces exigences dans des conditions industrielles, lesquelles impliquent, entre autres, la faculté de traitement dans des installations de grande taille.

Il est aisé de comprendre qu'un point clé est constitué par la mise en contact et la qualité du micro-mélange des réactifs. Les courbes précédentes mettent en particulier en lumière qu'un faible écart en $H_2O/Na_2O$ et $SiO_2/Al_2O_3$ entre deux points du milieu conduit à une différence sensible sur la granulométrie.

Or, selon l'invention, on peut obtenir une bonne homogénéité des produits obtenus de manière très simple et extrapolable à des installations de type industriel.

En particulier, la demanderesse a observé que l'on pouvait obtenir des résultats très bons sur le produit, même en effectuant le mélange à une température élevée, en s'assurant d'un nombre de Reynolds égal à au moins deux fois la valeur du nombre de Reynolds critique pour un intervalle de température compris entre 20 et 90 °C, avantageusement 60 et 90 °C, la valeur du nombre de Reynolds devant être d'autant plus élevée que la température du mélange est elle-même plus élevée.

Par ailleurs, la demanderesse a observé que la valeur de ce nombre de Reynolds devait être d'autant plus élevée que le diamètre du réacteur était plus important.

Par ailleurs, la demanderesse a observé que le nombre de Reynolds devait être d'autant plus élevé que le débit est plus grand.

De manière empirique, la demanderesse a constaté que dans le cas d'un réacteur tubulaire, pour un diamètre de tube inférieur ou égal à 10 mm et/ou un débit inférieur à 1 $m^3$/h, la valeur du nombre de Reynolds devait être comprise entre 2 et 5 fois la valeur du nombre de Reynolds critique.

Au-delà de cette valeur de 10 mm pour le diamètre, on doit choisir une valeur du nombre de Reynolds supérieure, pour un débit inférieur à 1 $m^3$/h, de préférence comprise entre 5 et 10 fois ladite valeur.

De manière inattendue, on s'est aperçu que pour des débits importants, c'est-à-dire globalement supérieurs à 1 $m^3$/h, le procédé de l'invention permettait une distribution rapide de l'énergie en conservant des temps de mélange brefs (inférieurs à la seconde et même moins à température élevée), en jouant sur les nombres de Reynolds. Dans ce cas, avantageusement, on fait appel à des valeurs élevées du nombre de Reynolds, supérieur à 50.000 et de préférence 100.000 pour de tels débits. On peut, de cette manière, maintenir la qualité du produit obtenu: sphérique, à constante de vitesse élevée, à faible taille de particules et à distribution étroite de taille desdites particules, ce qui est impossible pratiquement avec des systèmes agités sur des réacteurs de grande capacité.

On peut ainsi, de manière simple, fabriquer à l'échelle industrielle des produits tout à fait comparables à ceux que l'on peut obtenir au laboratoire.

Ceci est d'une très grande importance pratique car on peut faire appel à des solutions initialement chaudes ou effectuer le transfert de chaleur sur les solutions initiales de réactifs, avant gélification, alors que, jusqu'à présent, on était obligé d'effectuer le transfert de chaleur soit sur le gel, soit au mieux directement avant gélification après avoir effectué l'homogénéisation du mélange à basse température.

Or, selon l'invention, le temps de mélange n'a pour limite supérieure que le temps de gélification.

L'invention permet, en particulier, de soumettre le milieu initial à l'action d'un fluide caloporteur tel que vapeur d'eau surchauffée, de manière à opérer un transfert de chaleur sur ledit milieu avant gélification.

L'invention permet notamment d'obtenir un gel très homogène qui ne présente pas une viscosité importante et permet une bonne cristallisation.

Par gel homogène, on entend un gel dont la concentration en réactifs, la composition et la température sont les mêmes pour tous les éléments de volume du gel.

Par gel ne présentant pas une viscosité trop importante, on entend un gel qui s'écoule facilement et qui peut être agité sans faire intervenir une force de cisaillement importante.

Le procédé selon l'invention permet, en particulier, d'effectuer la synthèse de zéolites 4A de formule générale

$$1\pm0,2\ Na_2O,\ Al_2O_3\ 1,6\text{-}2,1\ SiO_2,\ 0\ \grave{a}\ 6\ H_2O$$

à partir d'une composition du milieu initial suivante:

$$1,3\ \grave{a}\ 10\ Na_2O,\ 1\ Al_2O,\ 0,2\ \grave{a}\ 2\ SiO_2,\ 20\ \grave{a}\ 400\ H_2O$$

par alimentation en continu et simultanée des réactifs jusqu'à formation d'un gel, le milieu réactionnel de départ correspondant à un milieu avec un excès de soude et d'alumine.

De même, le procédé s'applique à la synthèse de zéolites 4A et/ou 13X répondant à la formule générale:

$$1\pm0,2\ Na_2O,\ Al_2O_3\ 1,6\text{-}3\ SiO_2,\ 0\ \grave{a}\ 6\ H_2O$$

à partir d'une composition du milieu initial suivante:

$$1,3\ \grave{a}\ 10\ Na_2O,\ 1\ Al_2O_3,\ 2\ \grave{a}\ 4\ SiO_2,\ 20\ \grave{a}\ 400\ H_2O$$

avec alimentation en continu et simultanée des réactifs jusqu'à formation d'un gel, le milieu de départ (ou initial) correspondant à un milieu avec excès de soude et de silice.

La température peut être comprise entre 20 et 90 °C.

Le temps de mélange doit être faible:

à 90 °C < 5 s et de préférence à 1 s, avantageusement à 0,2 s à 20 °C < 30 s

Un avantage du procédé consiste à pouvoir choisir le temps de mélange. Ainsi, on peut prendre un temps inférieur à 5 secondes à 20 °C, les valeurs pour les temps étant les valeurs limites estimées à partir des temps de gélification.

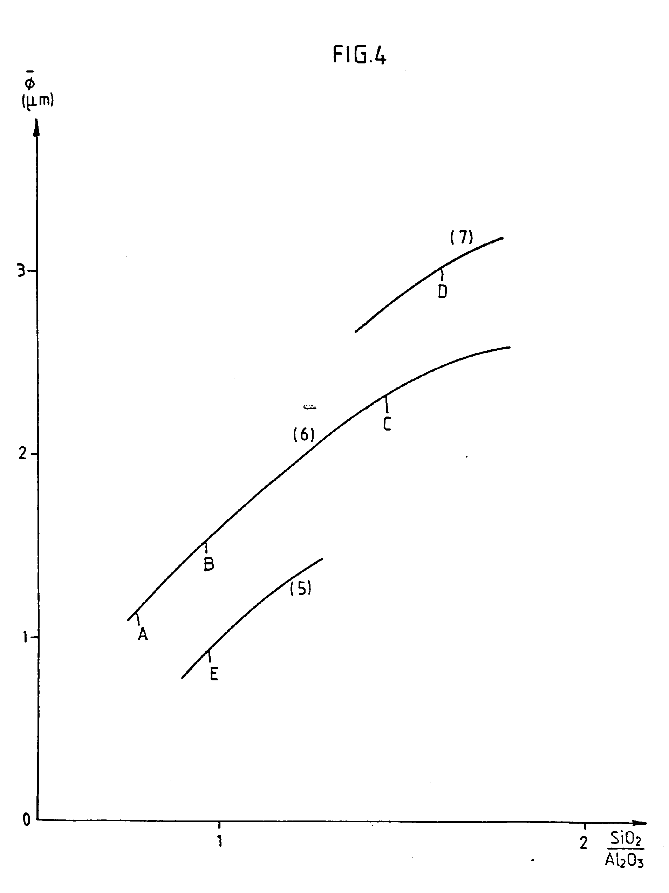

Selon le concept de l'invention, l'homme de l'art, en fonction de la granulométrie demandée, peut déterminer (figure 4) des couples $SiO_2$/$Al_2O_3$-$H_2O$/$Ha_2O$. A chacun de ces couples, il peut faire correspondre des temps de gélification qui sont fonction de la température, ce qui lui permet de déterminer le temps de mélange maximal permis, d'où de déterminer la valeur minimale du nombre de Reynolds.

Pratiquement, comme déjà dit, cette valeur du nombre de Reynolds est supérieure à celle du nombre du Reynolds critique et augmente avec l'élévation de température et la concentration du silicate de départ.

Selon une forme particulière de mise en oeuvre, on fabrique des zéolites 4A parfaitement cristallines de taille moyenne de particules comprise entre 0,5 et 5 $\mu$m, avantageusement 1 et 3 $\mu$m, en alimentant en continu et simultanément une solution aqueuse de silicate de sodium et une solution aqueuse d'aluminate de sodium dans un réacteur tubulaire, la composition du milieu initial correspondant à 1,5 à 7 $Na_2O$, $Al_2O_3$, 0,5 à 2 $SiO_2$, 25 à 200 $H_2O$, le temps de mélange dans le réacteur tubulaire étant inférieur au temps de gélification, la température étant comprise entre 20 et 90 °C et avantageusement entre 60 et 90 °C et le nombre de Reynolds étant au moins égal à deux fois le nombre de Reynolds critique.

Ce mode de réalisation permet d'obtenir des zéolites de faible granulométrie, de répartition granulométrique très étroite dans le cadre d'un procédé où le silicate est apporté en défaut par rapport à l'aluminate.

Selon ce mode, on peut intégrer au procédé une fabrication de l'aluminate. Tous les réactifs étant chauds, on observe un gain énergétique appréciable. Par ailleurs, il n'est pas nécessaire de réchauffer le gel, ce qui est un avantage considérable.

Selon un autre mode de réalisation, on opère dans les mêmes conditions sauf que l'on se place en excès de silicate ($SiO_2/Al_2O_3 > 2$). On observe une forte diminution de la granulométrie, comme le montre la figure 4.

Selon encore une autre forme de réalisation, on se place au voisinage du rapport $SiO_2/Al_2O_3 = 2$. Dans ce cas, les travaux de la demanderesse ont montré que pour une même valeur du rapport molaire $H_2O/Na_2O$, la granulométrie est plus élevée.

Le procédé selon l'invention présente donc une très grande souplesse en faisant appel à un moyen très simple. De manière inattendue, on peut obtenir à chaud un gel à la fois homogène en réactifs, concentrations et températures et facile à cristalliser.

Ce procédé peut être mis en oeuvre par un réacteur constitué simplement par un tube cylindrique ou autre dans lequel on fait arriver les réactifs. Bien entendu, ce moyen simple n'est pas limitatif de l'invention.

Le gel est recueilli en continu et sous agitation modérée.

Il peut alors subir toute opération telle que vieillissement et cristallisation.

Le produit obtenu par le procédé de l'invention présente des qualités remarquables, en particulier en ce qui concerne la constante de vitesse rapportée à la surface de zéolite par litre de solution qui est supérieure à 0,15, de préférence supérieure à 0,25 et avantageusement comprise entre 0,4 et 4 secondes $^{-1}$litre mètre$^{-2}$ ($s^{-1}$ l $m^{-2}$), ci-après désignée par ks.

Par ailleurs, les zéolites présentent:
- un diamètre moyen de particules primaires compris entre 0,1 et 10 $\mu$m et avantageusement entre 0,5 et 5 $\mu$m,
- un pouvoir d'échange théorique de cation supérieur à 100 mg de $CaCO_3$/g de produit anhydre, et de préférence supérieur à 200 mg.

Ces qualités le rendent donc particulièrement apte à l'application en détergence comme auxiliaire de détergence (builder) en tant que substitut de détergence, seul ou en combinaison avec d'autres auxiliaires de détergence tels que le tripolyphosphate, le NTA, les carbonates, etc...

En particulier, les zéolites obtenues par le procédé de l'invention présentent des propriétés remarquables lorsqu'elles sont mises en oeuvre en composition lessivielle avec un tripolyphosphate obtenu selon la demande française N° 82/ 13065 du 27 juillet 1982, qui revendique un procédé d'obtention d'un tripolyphosphate à vitesse d'hydratation élevée selon lequel:

a) on prépare une solution d'orthophosphates de sodium mono et disodique de rapport molaire global Na/P compris entre 1,64 et 1,70;

b) on forme un écoulement puits-tourbillon avec une phase gazeuse chaude à grande quantité de mouvement;

c) on introduit la solution d'orthophosphates préparée en a) dans ladite zone de dépression de l'écoulement puits-tourbillon de manière à provoquer la dispersion et le traitement thermique de ladite solution d'orthophosphates par la phase gazeuse, de manière à obtenir le tripolyphosphate;

d) on soumet le produit obtenu en c) à un traitement thermique complémentaire.

Mais la présente invention sera plus aisément comprise à l'aide des exemples suivants, donnés à titre illustratif mais nullement limitatif.

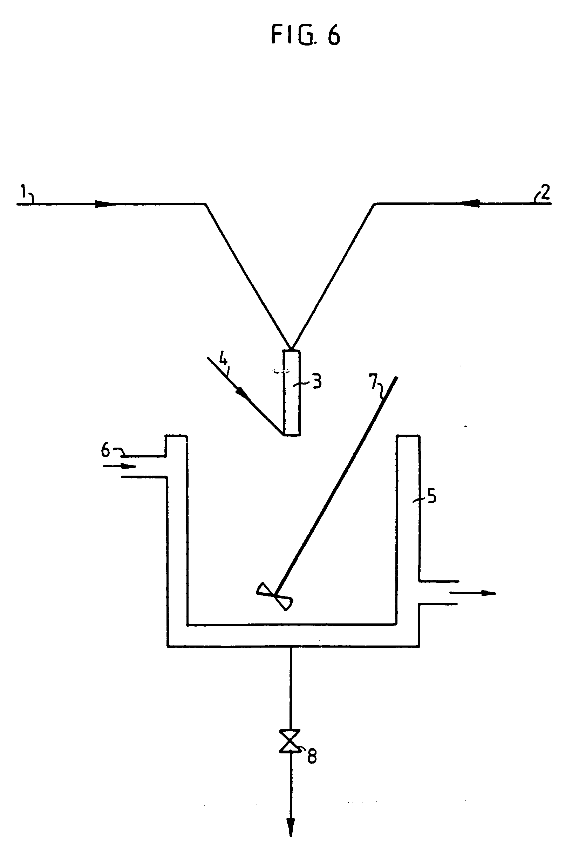

La figure 6 donne une illustration schématique du dispositif employé.

On alimente par (1) une solution aqueuse d'aluminate de sodium et par (2) une solution aqueuse de silicate de sodium dans un réacteur (3) de type tubulaire constitué par un tube lisse qui débouche au-dessus d'une cuve (5), pourvue d'un agitateur (7). Cette cuve est maintenue en température grâce à une circulation de fluide caloporteur dans une double enveloppe (6).

Le dispositif peut également présenter un éjecteur vapeur (4) disposé en sortie du réacteur tubulaire (3). L'installation présente en outre des moyens de soutirage (8).

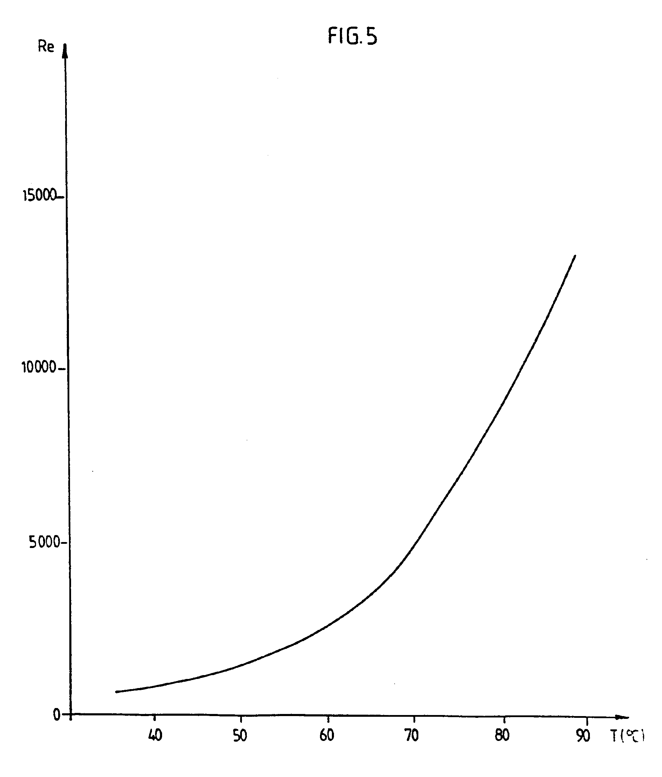

A la figure 5, on a figuré la variation du nombre de Reynolds minimal en fonction de la température pour un milieu correspondant aux conditions suivantes (exemple 1):

- $SiO_2/Al_2O_3 = 0,8$ $H_2O/Na_2O = 21,7$
- Concentration en zéolite 4A égale à 120 g/l
- Diamètre du réacteur tubulaire $\leqq 10$ mm

Exemple 1

Cet exemple a pour but de montrer comment on peut jouer sur la granulométrie en faisant varier simplement la composition chimique du système et/ou les conditions opératoires.

On introduit simultanément des solutions aqueuses préchauffées, ou non, d'aluminate de sodium (1) et de silicate de sodium (2) dans le réacteur tubulaire (3).

Le chauffage par double enveloppe de la cuve permet de porter le mélange à une température de cristallisation (85 °C) et de le maintenir à cette température pendant la durée de cette cristallisation qui est de deux heures.

On a porté au tableau Ia les compositions chimiques et en regard la granulométrie correspondante.

TABLEAU Ia

| N° | Aluminate (mole) | | | Silicate (mole) | | | Mélange (mole) | | | | $\varnothing$ ($\mu$m) |
|---|---|---|---|---|---|---|---|---|---|---|---|
| | $Na_2O$ | $Al_2O_3$ | $H_2O$ | $Na_2O$ | $SiO_2$ | $H_2O$ | $Na_2O$ | $Al_2O_3$ | $SiO_2$ | $H_2O$ | |
| 1 | 2 | 1 | 40 | 1 | 2 | 30 | 6 | 2,5 | 2 | 130 | 1,2 |
| 2 | 2,5 | 1 | 50 | 1 | 2 | 30 | 6 | 2 | 2 | 130 | 1,6 |
| 3 | 3,57 | 1 | 71,4 | 1 | 2 | 30 | 6 | 1,4 | 2 | 130 | 2,3 |
| 4 | 3,6 | 1 | 80 | 1 | 2 | 30 | 5,5 | 1,25 | 2 | 130 | 3,0 |
| 5 | 1,61 | 1 | 19,4 | 0,6 | 2 | 30 | 3,5 | 1,8 | 2 | 65 | 1,2 |

A la figure 4, on a porté les points de fonctionnement A, B, C, D et E correspondant aux essais 1, 2, 3, 4 et 5, de manière à figurer la relation entre le couple des rapports $SiO_2/Al_2O_3$, $H_2O/Na_2O$ et la granulométrie.

Au tableau Ib, pour chaque essai, on fait varier les conditions opératoires, tout en conservant la même granulométrie finale.

On observe:

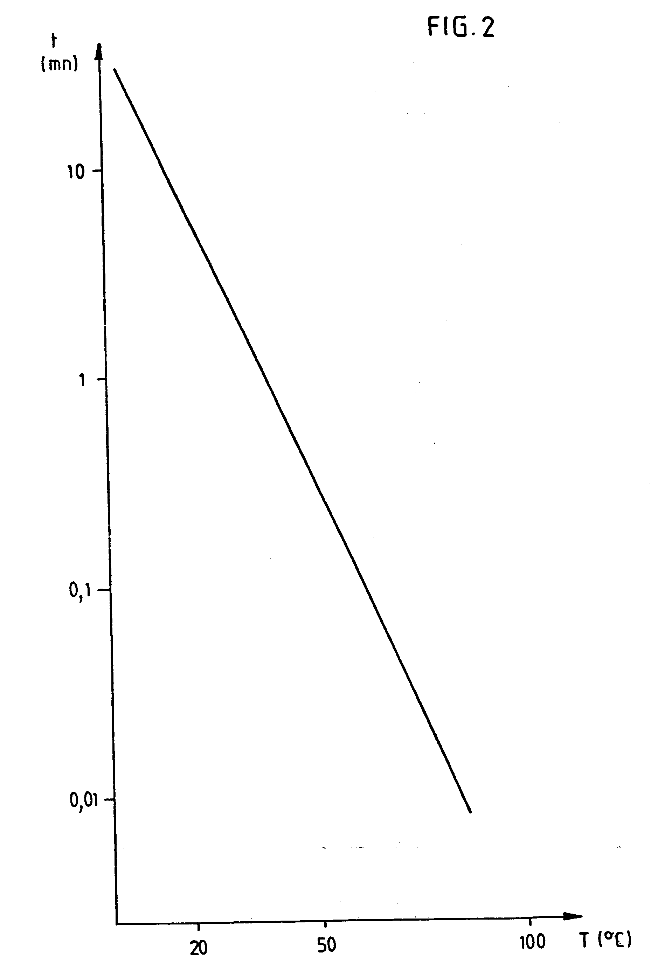

- que l'on peut faire varier la température de mélange dans de larges limites en jouant sur le nombre de Reynolds et donc sur la géométrie du dispositif de mélange
- que les résultats sont obtenus sur une quantité de l'ordre de 200 litres de mélange, donc sont à une échelle extrapolable industriellement
- que les vitesses peuvent varier dans un intervalle important
- que les temps de gélification sont très courts, ainsi qu'on peut l'observer, notamment à la figure 2 qui correspond à l'exemple 5.

TABLEAU Ib

| N° | T (°C) mélange | Tube lisse Ø (mm) | L (mm) | Mélange Débit (l/h) | Re | Temps d'ali-mentation du tube lisse (mn) | Ø (μm) | Volume cristal-lisé (l) |
|---|---|---|---|---|---|---|---|---|
| 1-a | 80 | 8 | 40 | 372 | 12.800 | 35 | 1,2 | 217 |
| 1-b | 70 | 10 | 130 | 445 | 9.200 | 30 | 1,2 | 222 |
| 1-c | 35 | 10 | 130 | 240 | 1.900 | 45 | 1,2 | 180 |
| 1-d | 35 | 10 | 250 | 475 | 3.700 | 30 | 1,2 | 238 |
| 1-e | 85 | 10 | 250 | 430 | 12.700 | 30 | 1,2 | 215 |
| 1-f | 85 | 8 | 40 | 475 | 15.800 | 30 | 1,2 | 238 |
| 2-a | 85 | 10 | 250 | 430 | 12.700 | 30 | 1,6 | 215 |
| 2-b | 80 | 8 | 40 | 470 | 14.700 | 30 | 1,6 | 235 |
| 3-a | 85 | 16 | 200 | 240 | 6.200 | 60 | 2,3 | 240 |
| 3-b | 80 | 8 | 100 | 250 | 10.200 | 45 | 2,3 | 188 |
| 3-c | 20 | 8 | 100 | 250 | 2.500 | 60 | 2,3 | 250 |
| 4-a | 20 | 8 | 40 | 145 | 2.000 | 90 | 3,0 | 217 |
| 4-b | 85 | 8 | 40 | 370 | 15.000 | 30 | 3,0 | 185 |
| 5-a | 20 | 10 | 250 | 240 | 940 | 60 | 1,2 | 240 |
| 5-b | 35 | 10 | 250 | 240 | 1.900 | 90 | 1,2 | 210 |
| 5-c | 60 | 10 | 250 | 240 | 3.400 | 60 | 1,2 | 240 |
| 5-d | 85 | 8 | 40 | 720 | 16.000 | 20 | 1,2 | 240 |

Exemple 2

Il est identique à l'essai 5-a sauf que le transfert de chaleur est effectué par l'éjecteur vapeur (4) à la sortie du réacteur tubulaire (3). Il donne un produit identique à l'essai 5-a de l'exemple 1.

Exemple 3

On remplace dans l'essai 5-a le réacteur tubulaire (3) par un mélangeur statique de diamètre égal à 4,9 mm, de longueur égale à 135 mm. Le produit obtenu est identique à celui de l'essai 5-a.

Si on opère la même substitution dans l'essai 5-c, on observe un bouchage du mélangeur statique après 5 minutes de fonctionnement.

Exemple 4

Cet exemple a pour but d'illustrer les propriétés du produit selon l'invention selon le tableau

| | 5a | 4a | 1e | Témoin |
|---|---|---|---|---|
| ks | 0,8 | 0,70 | 0,7 | 0,14 |

Le témoin est constitué par une zéolite 4A de type cubique, de capacité d'échange mesurée en mg $CaCO_3$/g d'anhydre égale à $226\pm10$. La capacité d'échange a été déterminée au bout de 15 minutes, en milieu NaCl 3 g/l, au moyen d'une électrode spécifique au calcium (ORION-93-20).

La concentration initiale en calcium utilisée est de $5 \cdot 10^{-3}$ mol $l^{-1}$ et la concentration en zéolite de 1 g (anhydre)/l. La température est de 25 °C.

ks représente la constante de vitesse rapportée à la surface de zéolite par litre de solution, exprimée en $s^{-1}$ $l$ $m^{-2}$.

Celle-ci est déterminée à partir de la vitesse d'échange initial V qui a pour expression

$$V = -\frac{d\,(Ca2+)}{dt} = k\,(Ca^{2+})\,(Zéol.) = k_s\,(Ca^{2+})\,S.$$

avec:

(Zéol.):    concentration en zéolite exprimée en ppm de zéolite anhydre

k:    constante de vitesse du second ordre, exprimée en $s^{-1}$ $ppm^{-1}$

S:    surface de zéolite mise en jeu par litre de solution, mesurée au microscope à balayage, exprimée

en m² l⁻¹

$k_s$: constante de vitesse rapportée à la surface de zéolite, par litre de solution, exprimée en $s^{-1}$ l $m^{-2}$

La mesure de la vitesse d'échange initial du calcium par une zéolite se fait au moyen d'une « cellule à circulation forcée » (A.M. GARY et J.P. SCHWING, BULL. SOC. CHIM. 9 (1972), 3654-A.M. GARY, E. PIEMONT, M. ROYNETTE et J.P. SCHWING, Anal. Chem. 44, (1972), 198 - A.M. GARY, THESE 3ème CYCLE STRASBOURG (1970). Ce dispositif permet d'obtenir un temps de mélange suffisamment faible pour ne pas perturber la mesure de la cinétique d'échange. On suit ainsi, après mélange très rapide des réactifs, la variation de concentration en calcium avec le temps, au cours de la réaction d'échange, par spectrophotométrie en milieu hétérogène à l'aide d'un indicateur de calcium: la murexide (longueur d'onde 495 nm).

Afin de mettre en évidence d'autres avantages, en détergence, des zéolites obtenues par le procédé de l'invention, on a réalisé un essai d'incrustation selon la demande française 82 10638 du 18 juin 1982.

Pour comparer les performances en incrustation d'une zéolite témoin et d'une zéolite selon l'invention, de même granulométrie, on a entrepris une série de lavages à l'aide d'une formulation détergente à auxiliaire de détergence mixte TPP - zéolite de composition suivante:

| COMPOSANTS | % EN POIDS |
|---|---|
| — Dodécylbenzène sulfonate de sodium linéaire | 7,5 % |
| — Stéarate de sodium | 3 % |
| — Alcool linéaire en $C_{18}$ éthoxylé à 12 moles d'oxyde d'éthylène | 3 % |
| — Alcool linéaire en $C_{18}$ éthoxylé à 50 moles d'oxyde d'éthylène | 2 % |
| — Tripolyphosphate de sodium anhydre | 13,75% |
| — Zéolite | 13,75% |
| — Pyrophosphate de sodium | 2 % |
| — Phosphate trisodique | 0,5 % |
| — Silicate de sodium à 20% d'eau | 8,6 % |
| — Sulfate de soude | 17,5 % |
| — Carboxyméthylcellulose | 1,5 % |
| — Azurants optiques | 0,4 % |
| — Enzymes | 0,3 % |
| — Perborate, 3 $H_2O$ | 25 % |
| — Silicate de magnésium | 1 % |
| — EDTA Na | 0,2 % |

On a effectué des cycles cumulés de lavage en tergotomètre à 60 °C. La concentration en lessive mise en jeu est de 6 g/l et la dureté de l'eau utilisée est de 32° H.T. (NFT 90 003) $[Ca^{++}]/[mg^{++}] \sim 5$ rapport molaire. Chaque cycle comprend une phase de lavage de 20 minutes et 3 rinçages en eau dure. Chaque pot du tergotomètre contient douze pièces de coton (réf. 405 Testfabric, dimension $10 \times 12$ cm). La quantité de solution mise en jeu dans chaque lavage et dans chaque rinçage est de 1 litre par pot.

L'incrustation est évaluée au bout de 30 cycles cumulés de lavage par la mesure du taux de cendre. On a trouvé:

| | Taux de cendres |
|---|---|
| Témoin | 8,5 |
| Essai 4a | 7,1 |

On a vérifié que la proportion de zéolite dans les cendres était de:

Témoin 4,2% par rapport à la quantité de cendres

Essai 4a 2,8% par rapport à la quantité de cendres

Exemple 5

Cet exemple a pour but de montrer l'amélioration apportée par un TPP selon l'invention, en association avec une zéolite 4A comme co-auxiliaire de détergence (co-builder), en présence d'un tensioactif non-ionique.

Dans cet exemple, on a mis en oeuvre plusieurs polyphosphates et plusieurs zéolites.

Les conditions opératoires sont les suivantes:

| | | |
|---|---|---|
| – TPP (préhydraté 1,5%) | 25 | g compté en anhydre |
| – Zéolite | 25 | g compté en anhydre |
| – Suljfate de sodium | 17 | g compté en anhydre |
| – Non-ionique (C = 17; OE = 25) | 1,7 g | |
| – Eau | 100 g | |

On porte le milieu à 70 °C pendant 30 min; cette bouillie est ensuite atomisée à différentes températures correspondant, pour le TPP obtenu, soit à un séchage simple (TPP 6 $H_2O$), soit à un surséchage correspondant à 4 moles d'eau résiduelle par mole de TPP initial.

Les produits mis en oeuvre sont:
- zéolite:
  * correspondant à l'essai 5a
  * témoin 4A de type cubique du commerce de diamètre de particule égal à 3 $\mu$m
- tripolyphosphate de sodium:
  * phase I et II de type commercial
  * et tripolyphosphate obtenu comme décrit dans la demande française 82 13065, c'est-à-dire de la manière suivante.

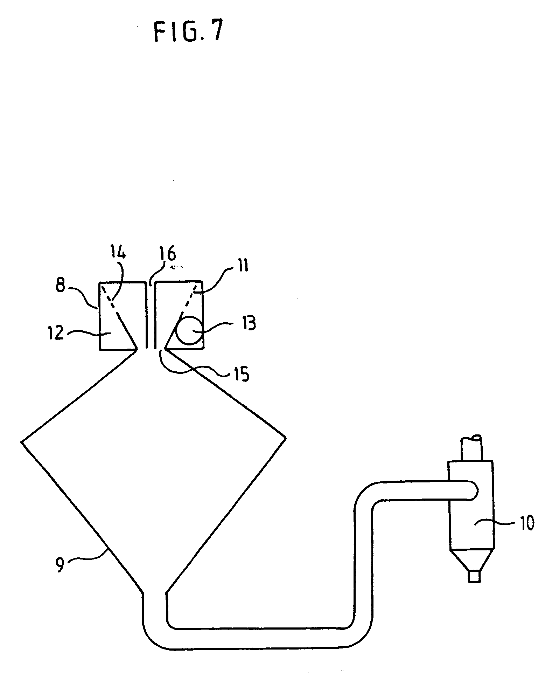

L'installation utilisée est schématisée à la figure 7 annexée.

Elle comprend une tête de dispersion (8), un bicône de réception (9) et un cyclone (10). La tête présente un panier perforé (11) définissant un espace annulaire (12) dans lequel débouche une entrée tangentielle (13). Cet espace permet de réaliser l'écoulement puits-tourbillon symétrique grâce à des orifices tels que (14) et au col (15). La phase à traiter (solution) est introduite par un conduit axial (16), de manière à la conduire dans la zone de dépression du puits-tourbillon, c'est-à-dire dans la partie amont du bicône (9).

Les gaz de traitement sont amenés chauds dans l'espace annulaire (12).

Les TPP mis en oeuvre ont été obtenus à partir d'une solution d'orthophosphate de qualité technique (acide provenant de l'attaque du minerai par $H_2SO_4$ neutralisé par NaOH ou $Na_2CO_3$ jusqu'au rapport $Na_2O/P_2O_5$ = 1,66 et filtré).

1) Obtention du TPP (selon la demande française 82 13065)

Une solution contenant 19,6% $P_2O_5$, 14,2% $Na_2O$ (Na/P = 1,66) et les impuretés suivantes $Na_2SO_4$: 2,8%; NaF: 0,2%; $SiO_2$ = 0,14%; NaCl: 0,3%; Ca: 400 ppm; Mg: 400 ppm; somme des impuretés métalliques: 1000 ppm) est pulvérisée dans ce dispositif par un courant d'air chauffé à 930 °C ayant un débit de 50 $Nm^3$/h. Le débit de la solution est ajusté de façon à obtenir une température de sortie des gaz et du produit de 450 °C.

Le produit obtenu est soumis à un chauffage complémentaire dans un four tubulaire à 500 °C pendant 10 minutes.

2) Préhydratation du TPP

Les TPP utilisés dans les exemples sont préhydratés, d'une manière identique, par pulvérisation d'eau de telle sorte que la perte à 350 °C soit voisine de 1,5%.

Le tripolyphosphate obtenu correspond à un taux de phase I

$$= \frac{Phase\ I}{Phase\ I\ =\ Phase\ II} \times 100$$

mesuré par spectroscopie Raman de 87%, mais présente un comportement caractéristique; par la suite, il sera désigné par STPP selon la demande française 82 13065.

Les résultats sont consignés au tableau ci-après.

| Taux d'hydrolyse | Zéolite selon essai 5-a | | Zéolite témoin | |
|---|---|---|---|---|
| | Séchage | Sursé-chage | Séchage | Sursé-chage |
| STPP Phase II | 10 | 10 | 11 | 25 |
| STPP Phase I | 15 | 34 | 18 | 69 |
| STPP* témoin à 87% Phase I | 13 | 31 | 16 | 61 |
| STPP selon demande n° 82 12065 | 12 | 17 | 12 | 35 |

* ce STPP a été obtenu par calcination au four, à une température de 520°C d'un STPP commercial à 31% de phase I.

On voit que:
- pour la phase II, on note une nette amélioration au surséchage.

On rappelle que cette forme de TPP est actuellement la plus employée en détergence. Cette amélioration permet une plus grande latitude en ce qui concerne la conduite de la température du séchage, donc une plus grande souplesse du contrôle des paramètres lors de l'atomisation.
- l'évolution de la fabrication des lessives allant vers la substitution d'une partie de phase II par de la phase I, en raison de la plus grande vitesse d'hydratation de cette dernière, le tableau montre que les produits de l'invention permettent une amélioration caractéristique du séchage et un gain très important au niveau surséchage.

Mais on sait qu'un des inconvénients de la phase I réside dans l'augmentation de la viscosité de la bouillie en milieu tensio-actif non-ionique, ce qui en limite l'utilisation. La comparaison STPP phase I (87%), selon la demande française 82 13065 montre que le produit selon l'invention a un comportement identique au séchage, mais une forte amélioration au niveau surséchage.

En conclusion:
- le procédé selon l'invention conduit à des produits qui sont au moins équivalents aux produits existants au séchage et s'avèrent beaucoup plus performants au surséchage
- sachant que la présence de zéolite comme co-auxiliaire de détergence (co-builder) provoque une augmentation du taux d'hydrolyse du TPP, on observe que le procédé selon l'invention conduit à des produits qui permettent de réduire cette augmentation du taux d'hydrolyse. A taux d'hydrolyse identique, on peut donc remplacer une plus grande quantité de TPP phase II par du TPP phase I et surtout par un TPP selon la demande française 82 13065, ce qui permet d'améliorer la cinétique et le taux d'hydratation du TPP anhydre en présence de zéolites.

Les exemples 6 et 7 ont pour but de montrer l'intérêt de l'invention lors de l'extrapolation à l'échelle industrielle.

Exemple 6

Dans cet exemple, on se place dans les mêmes conditions de milieu chimique qu'à l'exemple 1 mais à une échelle industrielle.

Le débit du mélange est de 1,5 m³/h pendant 1 h dans un tube en acier inoxydable de diamètre = 16 mm et de longueur = 170 mm.

Le nombre de Reynolds utilisé est de 25.700 pour une température de 85 °C.

Le mélange sort liquide du tube et se gélifie dans les quelques centimètres suivant sa sortie du tube.

Le produit obtenu obtenu après cristallisation est identique à celui de l'exemple 1.

Exemple 7

On reprend les mêmes conditions qu'à l'exemple 6 mais avec un débit de 15 m³/h et un tube de diamètre égal à 20 mm, de longueur égale à 450 mm, en travaillant avec un nombre de Reynolds de 203.000. Le temps de séjour est de 0,034 s.

Le mélange sort liquide et gélifie à proximité de la sortie du tube.

Le produit est toujours identique.

**Revendications**

1. Procédé d'obtention d'une zéolite par alimentation continue et simultanée d'une solution aqueuse de silicate de sodium et d'une solution aqueuse d'aluminate de sodium, mélange de ces solutions pendant le temps nécessaire à rendre ledit mélange homogène tout en étant inférieur au temps de gélification du milieu réactionnel, gélification et cristallisation, ledit procédé étant caractérisé en ce que les solutions aqueuses d'aluminate et de silicate sont alimentées à une température allant de 20 à 90°C dans un réacteur non agité permettant d'assurer un nombre de Reynolds égal à au moins deux fois la valeur du nombre de Reynolds critique pour un intervalle de température compris entre 20 à 90°C, la valeur du nombre Reynolds devant être d'autant plus élevée que la valeur de la température du mélange est elle-même plus élevée.

2. Procédé selon la revendication 1, caractérisé par le fait que le réacteur non agité est un réacteur tubulaire.

3. Procédé selon la revendication 1, caractérisé par le fait que le mélange est effectué au moyen d'un mélangeur de type Venturi.

4. Procédé selon l'une des revendications 1 ou 2, caractérisé par le fait que, pour un réacteur tubulaire de diamètre < 10 mm, la valeur du nombre de Reynolds est comprise entre 2 et 5 fois la valeur du nombre de Reynolds critique.

5. Procédé selon l'une des revendications 1 ou 2, caractérisé par le fait que, pour un réacteur tubulaire de diamètre supérieur à 10 mm, la valeur du nombre de Reynolds critique est comprise entre 5 et 10 fois la valeur du nombre de Reynolds, pour un débit inférieur à 1m³/h.

6. Procédé selon l'une des revendications 1, 2, 4 ou 5, caractérisé par le fait que pour un débit supérieur à 1 m³/h, la valeur du nombre de Reynolds est supérieure à 50000.

7. Procédé selon l'une des revendications 1 à 6, caractérisé par le fait que l'on soumet le mélange initial à l'action d'un fluide caloporteur de manière à opérer un transfert de chaleur sur ledit mélange avant gélification.

8. Procédé selon l'une des revendications 1 à 7 pour la synthèse des zéolithes 4A de formule générale 1 ± 0,2 $Na_2O$ ; $Al_2O_3$ ; 1,6 à 2,1 $SiO_2$ ; 0 à 6 $H_2O$ à partir de la composition du milieu initial suivante : 1,3 à 10 $Na_2O$ ; 1 $Al_2O_3$ ; 0,2 à 2 $SiO_2$ ; 20 à 400 $H_2O$ avec alimentation en continu et simultanée des réactifs jusqu'à formation d'un gel, caractérisé par le fait que le milieu de départ correspond à un milieu en excès de soude et d'alumine.

9. Procédé selon l'une des revendications 1 à 7 pour la synthèse de zéolithes 4A et/ou 13 X de formule générale : 1 ± 0,2 $Na_2O$ ; $Al_2O_3$ ; 1,6 - 3 $SiO_2$ ; O à 6 $H_2O$ à partir d'un milieu initial de composition suivante : 1,3 à 10 $Na_2O$ ; 1 $Al_2O_3$ ; 2 à 4 $SiO_2$ ; 20 à 400 $H_2O$ avec alimentation en continu et simultanée des réactifs jusqu'à formation d'un gel, caractérisé par le fait que le milieu de départ correspond à un milieu avec excès de soude et de silice.

10. Procédé selon l'une des revendications 1 à 9 pour la fabrication de zéolites 4A parfaitement cristallisées, de taille moyenne de particules comprise entre 0,5 et 5 $\mu m$, avantageusement de 1 à 3 $\mu m$, caractérisé par le fait que :
    - on alimente en continu et simultanément une solution aqueuse de silicate de sodium et une solution aqueuse d'aluminate de sodium dans un réacteur tubulaire,
    - la composition du milieu initial correspondant à 1,5 à 7 $Na_2O$ ; $Al_2O_3$ ; 0,5 à 2 $SiO_2$ ; 25 à 200 $H_2O$,
    - le temps de mélange dans le réacteur tubulaire étant inférieur à 30 s pour une température comprise entre 20 et 90°C.

**Patentansprüche**

1. Verfahren zur Herstellung eines Zeoliths durch kontinuierliche und gleichzeitige Zuführung einer wässerigen Natriumsilikatlösung und einer wässerigen Natriumaluminatlösung, Mischung dieser Lösungen während einer Zeit, die notwendig ist, um diese Mischung homogen zu machen und die geringer ist, als die im Reaktionsmilieu vorliegende Gelbildungszeit, durch Gelbildung und Kristallisation, wobei das Verfahren **dadurch gekennzeichnet** ist, daß die wässerigen Aluminat- und Silikatlösungen bei einer Temperatur zwischen 20°C und 90°C in einen nicht gerührten Reaktor eingeführt werden, wobei sichergestellt ist, daß die Reynolds-Zahl mindestens den zweifachen Wert der kritischen Reynolds-Zahl in einem Temperaturintervall zwischen 20°C und 90°C ausmacht, wobei der Wert der Reynolds-Zahl umso höher sein muß, je höher die Temperatur der Mischung selbst ist.

2. Verfahren nach Anspruch 1, **dadurch gekennzeichnet,** daß der nicht gerührte Reaktor ein Rohrreaktor ist.

3. Verfahren nach Anspruch 1, **dadurch gekennzeichnet**, daß die Mischung mit Hilfe eines Mischers vom Typ Venturi durchgeführt wird.

4. Verfahren nach einem der Ansprüche 1 oder 2, **dadurch gekennzeichnet**, daß für einen Rohrreaktor vom Durchmesser < 10 mm der Wert der Reynolds-Zahl zwischen dem 2- und 5- fachen des Werts der kritischen Reynolds-Zahl liegt.

5. Verfahren nach einem der Ansprüche 1 oder 2, **dadurch gekennzeichnet**, daß für einen Rohrreaktor vom Durchmesser über 10 mm, der Wert der kritischen Reynolds-Zahl zwischen dem 5- und 10-fachen des Werts der Reynolds-Zahl für einen Durchsatz von unter 1m³/h liegt.

6. Verfahren nach einem der Ansprüche 1,2,4 oder 5, **dadurch gekennzeichnet**, daß für einen Durchsatz von über 1 m³/h der Wert der Reynolds-Zahl bei über 50.000 liegt.

7. Verfahren nach einem der Ansprüche 1 bis 6, **dadurch gekennzeichnet**, daß man die Ausgangsmischung der Einwirkung eines Wärmetransportfluids derart aussetzt, daß ein Wärmeübergang auf diese Mischung vor der Gelbildung stattfindet.

8. Verfahren nach einem der Ansprüche 1 bis 7 zur Synthese von Zeolithen 4A der allgemeinen Formel 1 ± 0,2 $Na_2O$; $Al_2O_3$; 1,6 bis 2,1 $SiO_2$; O bis 6 $H_2O$ ausgehend von folgender Zusammensetzung des Ausgangsmediums: 1,3 bis 10 $Na_2O$; 1 $Al_2O_3$; 0,2 bis 2 $SiO_2$; 20 bis 400 $H_2O$ mit kontinuierlicher und gleichzeitiger Zuführung der Reaktionskomponenten bis zur Gelbildung, **dadurch gekennzeichnet**, daß das Ausgangsmedium einem Medium mit überschüssigem Natriumhydroxid und Aluminiumoxid entspricht.

9. Verfahren nach einem der Ansprüche 1 bis 7 für die Synthese von Zeolithen 4A und/oder 13X der allgemeinen Formel: 1 ± 0,2 $Na_2O$; $Al_2O_3$ 1,6 - 3 $SiO_2$; 0 bis 6 $H_2O$ ausgehend von einem Ausgangsmedium folgender Zusammensetzung 1,3 bis 10 $Na_2O$; 1 $Al_2O_3$; 2 bis 4 $SiO_2$; 20 bis 400 $H_2O$ mit kontiunierlicher und gleichzeitiger Zuführung der Reaktionskomponenten bis zur Gelbildung, **dadurch gekennzeichnet**, daß das Ausgangsmedium einem Medium mit überschüssigem Natrium- und Siliciumoxid entspricht.

10. Verfahren nach einem der Ansprüche 1 bis 9, zur Herstellung von Zeolithen 4A, die vollständig kristallisiert sind und eine mittlere Teilchengröße zwischen 0,5 und 5 μm, vorzugsweise von 1 bis 3 μm haben, **dadurch gekennzeichnet**, daß:
    - man kontinuierlich und gleichzeitig eine wässerige Lösung von Natriumsilikat und eine wässerige Lösung von Natriumaluminat in einen Rohrreaktor einführt,
    - die Zusammensetzung des Ausgangsmediums 1,5 bis 7 $Na_2O$; $Al_2O_3$; 0,5 bis 2 $SiO_2$; 25 bis 200 $H_2O$ entspricht,
    - die Mischungszeit in dem Rohrreaktor weniger als 30 sec. für eine Temperatur zwischen 20 und 90°C beträgt.

**Claims**

1. A process for producing a zeolite by the continuous and simultaneous feed of an aqueous solution of sodium silicate and an aqueous solution of sodium aluminate, and mixing of these solutions for the length of time necessary to render said mixture homogeneous, but at the same time being less than the gelling time of the reaction medium, gelification and crystallisation, said process being characterised in that the aqueous solutions of aluminate and of silicate are supplied at a temperature of from 20 to 90°C in an unagitated reactor which permits a Reynolds number to be obtained which is equal to at least twice the value of the critical Reynolds number for a temperature range of 20 to 90°C, the value of the Reynolds number having to increase with the value of the temperature of the mixture.

2. A process according to Claim 1, characterised by the fact that the non-agitated reactor is a tubular reactor.

3. A process according to Claim 1, characterised by the fact that the mixing operation is effected by means of a mixer of venturi type.

4. A process according to one of Claims 1 or 2, characterised by the fact that in the case of a tubular reactor of diameter < 10 mm, the value of the Reynolds number is between 2 and 5 times the value of the critical Reynolds number.

5. A process according to one of Claims 1 or 2, characterised by the fact that for a tubular reactor of a diameter of greater than 10 mm, the value of the critical Reynolds number is between 5 and 10 times the value of the Reynolds number for a flow rate of less than 1 $m^3$/h.

6. A process according to one of Claims 1, 2, 4 or 5, characterised by the fact that for a flow rate of higher than 1 $m^3$/h, the value of the Reynolds number is higher than 50000.

7. A process according to one of Claims 1 to 6, characterised by the fact that the initial mixture is subjected to the action of a heat exchange fluid so as to provide for transfer of heat to said mixture before gelling.

8. A process according to one of Claims 1 to 7 for the synthesis of zeolites 4A of the general formula 1 ± 0.2 $Na_2O$; $Al_2O_3$; 1.6 to 2.1 $SiO_2$; 0 to 6 $H_2O$ from the following composition of the initial medium: 1.3 to 10 $Na_2O$; 1 $Al_2O_3$; 0.2 to 2 $SiO_2$; 20 to 400 $H_2O$ with continuous and simultaneous feed of reactants until a gel forms, characterised by the fact the starting medium corresponds to a medium with an excess of sodium and alumina.

9. A process according to one of Claims 1 to 7 for the synthesis of zeolites 4A and/or 13X of the general formula : 1 ± 0.2 $Na_2O$; $Al_2O_3$; 1.6 - 3 $SiO_2$; 0 to 6 $H_2O$ from an initial medium of the following composition: 1.3 to 10 $Na_2O$; 1 $Al_2O_3$; 2 to 4 $SiO_2$; 20 to 400 $H_2O$ with continuous and simultaneous feed of the reactants until a gel is formed, characterised by the fact that the starting medium corresponds to a medium with an excess of sodium hydroxide and silica.

10. A process according to one of Claims 1 to 9 for the production of perfectly crystallised zeolites 4A, with a mean particle size of between 0.5 and 5 $\mu$m, advantageously between 1 and 3 $\mu$m, characterised by the fact that:
    - an aqueous solution of sodium silicate and an aqueous solution of sodium aluminate are supplied continuously and simultaneously to a tubular reactor,
    - the composition of the corresponding initial medium corresponding to 1.5 to 7 $Na_2O$; $Al_2O_3$; 0.5 to 2 $SiO_2$; 25 to 200 $H_2O$,
    - the mixing time in the tubular reactor is less than 30 s for a temperature of between 20 and 90°C.

# FIG.1

FIG.2

FIG. 3

# FIG.4

FIG. 5

FIG. 6

FIG.7